# FASCICULE DE BREVET EUROPEEN

(11) **EP 1 726 938 B1**
(45) Date de publication et mention de la délivrance du brevet: **23.01.2013**
(21) Numéro de dépôt: 06076068.3
(22) Date de dépôt: 18.05.2006
(51) Int. Cl.: G01M 1/34

(54) **Procédé de calibrage en masse de pièces destinées à être montées en periphérie d'un rotor**
Verfahren zur Masskalibrierung von Werkstücken zur Montage auf der Peripherie eines Rotors
Method for mass calibration of parts to be mounted in the periphery of a rotor

(30) Priorité: 23.05.2005 FR 0505128
(43) Date de publication de la demande: 29.11.2006
(73) Titulaire: SNECMA, 75015 Paris (FR)
(72) Inventeur: Audic, Stéphane, 77920 Samois sur Seine (FR); Levebvre, Eric, 89340 Champigny (FR); Nitre, Thierry, 91330 Yerres (FR)
(74) Mandataire: Ramey, Daniel

(56) Documents cités:
- EP-A- 0 426 527
- FR-A- 2 043 077
- FR-A- 2 739 689
- GB-A- 763 596
- US-A1- 2002 017 094
- PATENT ABSTRACTS OF JAPAN vol. 007, no. 165 (M-230), 20 juillet 1983 (1983-07-20) -& JP 58 072604 A (HITACHI SEISAKUSHO KK), 30 avril 1983 (1983-04-30)

## Description

La présente invention concerne un procédé de calibrage en masse de pièces identiques et interchangeables, destinées à être montées en périphérie d'un rotor, en particulier d'une soufflante dans une turbomachine telle qu'un turboréacteur ou un turbopropulseur.

Un procédé de calibrage en masse d'un rotor est présenté dans US 2002/017094 A1.

La veine du flux d'air est délimitée intérieurement à l'entrée de la soufflante par des plates-formes allongées qui sont disposées entre les pieds des aubes de soufflante et fixées sur le rotor de la soufflante.

Ces plates-formes sont des pièces identiques et interchangeables qui doivent avoir la même masse, avec une tolérance faible qui peut par exemple être inférieure au gramme.

La fabrication de ces plates-formes génère une dispersion en masse relativement large de sorte qu'un calibrage en masse est nécessaire pour le rattrapage de cette dispersion.

En pratique, une solution consiste à peser chaque plate-forme et à coller au moins une masselotte en résine ou en élastomère dans une cavité longitudinale de la face intérieure de la plate-forme pour compenser un déficit en masse par rapport à une valeur prédéterminée.

Les plates-formes sont de forme complexe et le collage des masselottes est réalisé à la main. L'apport d'une ou de plusieurs masselottes modifie la position du centre de gravité de la plate-forme, ce qui peut générer en fonctionnement un basculement de la plate-forme autour de ses points de fixation sur le rotor, se traduisant par des décollements de la veine d'air avec une dégradation des performances du moteur.

L'utilisation de ces masselottes oblige également à un approvisionnement et à un stockage de ces composants, et leur fixation doit être réalisée soigneusement avec un adhésif.

L'invention a notamment pour but d'éviter tous ces inconvénients et d'apporter une solution simple, efficace et économique au calibrage en masse de ce type de pièces.

Elle propose à cet effet un procédé de calibrage en masse de pièces destinées à être montées en périphérie d'un rotor, caractérisé en ce que, les positions des axes d'inertie des pièces étant connues, il consiste, pour chacune des pièces, à prélever par usinage un volume de matière en une zone de la pièce située sur l'un de ses axes d'inertie pour ramener la masse de la pièce à une valeur prédéterminée, avec une tolérance prédéterminée.

Une pièce de forme quelconque comprend trois axes d'inertie qui sont perpendiculaires entre eux et qui passent par le centre de gravité de la pièce. Les positions de ces axes d'inertie sont déterminées par calcul, par exemple au moyen d'un logiciel de modélisation à partir notamment des dimensions de la pièce, de sa forme, et de la répartition géométrique de sa masse.

Le prélèvement de matière en une zone située sur un des axes d'inertie de la pièce permet de conserver l'équilibrage statique de la pièce autour de cet axe et donc d'éviter son basculement autour de cet axe en fonctionnement.

L'invention présente de nombreux avantages. Elle évite l'utilisation de masselottes qui augmente la masse des pièces et donc de la turbomachine et diminue les performances du moteur, et qui est très coûteuse par rapport à l'opération d'usinage du procédé selon l'invention. Elle évite également l'approvisionnement et le stockage des masselottes et de l'adhésif.

Le prélèvement de matière est de préférence réalisé en une zone de la pièce située sur son axe d'inertie longitudinal, et par exemple dans une face sensiblement radiale d'extrémité de la pièce. L'axe d'inertie longitudinal de la pièce est l'axe d'inertie qui s'étend dans la dimension la plus importante de la pièce.

Le prélèvement de matière est de préférence réalisé par lamage, fraisage ou perçage, et est avantageusement intégré au processus de fabrication des pièces.

Dans un mode de réalisation préféré de l'invention, le volume de matière à prélever est converti en un diamètre et une profondeur de trou à usiner dans la pièce, ce trou étant de préférence cylindrique à fond plat.

Les valeurs du diamètre et de la profondeur du trou à usiner ne sont pas choisies librement par l'opérateur, elles sont de préférence comprises entre des valeurs maximales et minimales prédéterminées, qui tiennent compte de différents facteurs liés à la zone de la pièce dans laquelle le prélèvement de matière est réalisé.

Le procédé selon l'invention est adapté particulièrement mais non exclusivement au calibrage en masse de plates-formes allongées de forme complexe destinées à être disposées entre les aubes d'une soufflante de turbomachine pour délimiter intérieurement la veine du flux d'air passant dans la soufflante. Sur ces plates-formes, le volume de matière à retirer est usiné dans une bride d'extrémité de chaque plate-forme, en une zone centrée sur l'axe d'inertie longitudinal de la plate-forme.

L'invention concerne également une pièce destinée à être montée en périphérie d'un rotor et comprenant un trou de calibrage en masse centré sur l'un de ses axes d'inertie, de préférence sur l'axe d'inertie longitudinal de la pièce. Cette pièce est par exemple une plate-forme qui délimite intérieurement la veine d'un flux d'air circulant entre les pales des aubes d'une soufflante de turbomachine.

L'invention concerne aussi une turbomachine telle qu'un turboréacteur ou un turbopropulseur, comprenant un rotor sur une périphérie duquel sont montées des pièces comprenant chacune un trou de calibrage en masse formé sur un axe d'inertie de la pièce, ces trous de calibrage en masse étant préférentiellement centrés sur les axes d'inertie longitudinaux des pièces.

D'autres détails, caractéristiques et avantages de la présente invention apparaîtront à la lecture de la description suivante, faite à titre d'exemple non limitatif, en référence aux dessins annexés dans lesquels :
- la figure 1 est une vue schématique en perspective d'une soufflante de turbomachine, vue de l'aval,
- la figure 2 est une vue schématique en perspective du disque de la soufflante de la figure 1, à plus grande échelle et vu de l'aval,
- la figure 3 est une vue schématique en perspective d'une plate-forme de soufflante, dont la masse a été calibrée avec un procédé de la technique antérieure,
- la figure 4 est une vue schématique en perspective d'une plate-forme de soufflante, dont la masse a été calibrée avec le procédé selon l'invention.

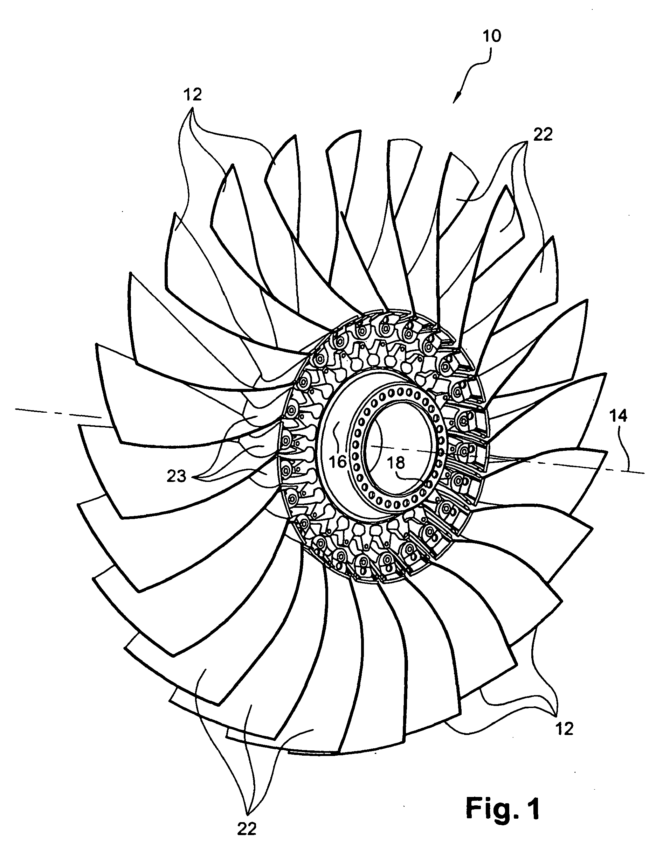

On a représenté en figure 1 un rotor de soufflante 10 d'une turbomachine telle qu'un turboréacteur ou un turbopropulseur, comprenant une pluralité d'aubes 12 s'étendant radialement autour de l'axe 14 de la soufflante et portées par un disque 16.

Le disque 16 comprend une bride annulaire aval 18 de fixation sur un arbre de la turbomachine.

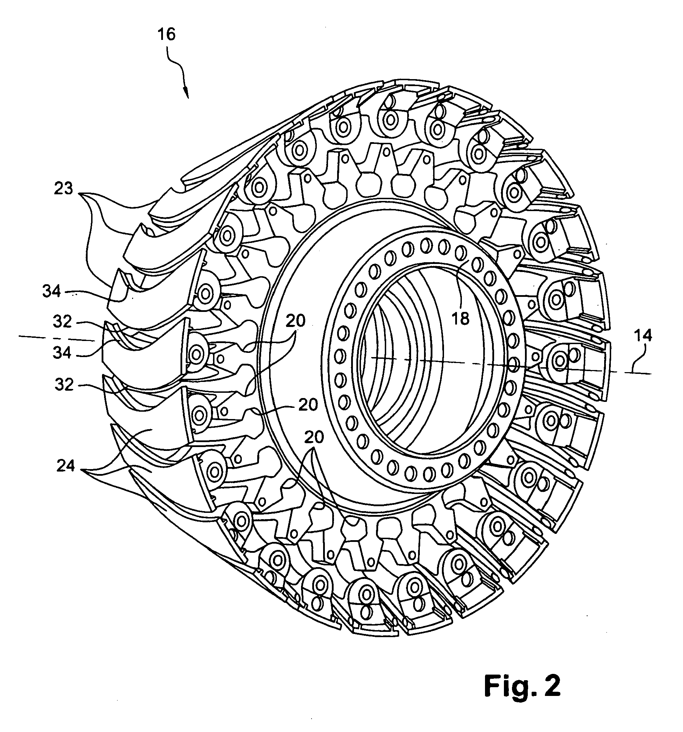

Les aubes 12 comportent chacune à leur extrémité radialement interne un pied (non représenté) qui est emmanché dans une rainure 20 correspondante prévue sur la périphérie externe du disque 16 (figure 2).

En fonctionnement de la turbomachine, la veine du flux d'air circulant entre les pales vrillées 22 des aubes est délimitée extérieurement par la paroi interne d'un carter et intérieurement par des plates-formes 23 s'étendant entre les pieds des aubes de soufflante 12.

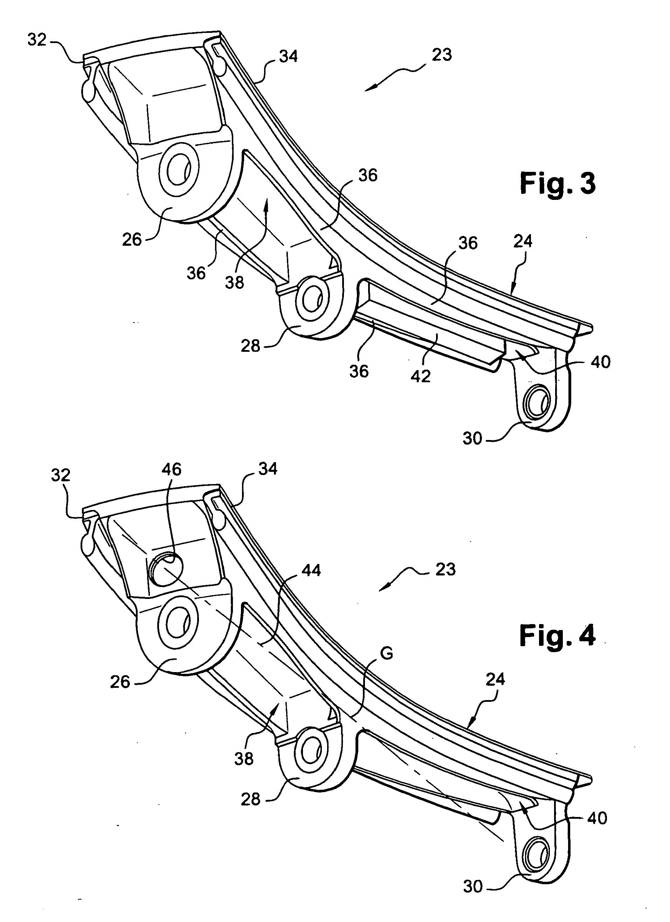

Chaque plate-forme 23 comprend une paroi 24 qui délimite intérieurement la veine du flux d'air entre deux aubes adjacentes, et des brides de fixation 26, 28 et 30, ici au nombre de trois, qui s'étendent sensiblement vers l'axe de rotation, et qui sont situées dans une partie amont, une partie aval et une partie intermédiaire de la paroi 24 par rapport à la direction d'écoulement de l'air (figure 3).

Les bords longitudinaux 32 et 34 de la paroi 24 sont incurvés, l'un convexe et l'autre concave, pour suivre les intrados et extrados des aubes 12 entre lesquelles la plate-forme 23 est montée.

La face radialement interne de la paroi 24 comporte également des nervures de rigidification 36 qui s'étendent sensiblement vers l'intérieur depuis la paroi 24 et qui relient les brides de fixation 26, 28 et 30 entre elles, en délimitant deux cavités 38 et 40 sous la paroi 24 entre les brides 26, 28 et 30, respectivement.

Dans la technique antérieure décrite plus haut, ces cavités 38, 40 recevaient des masselottes de calibrage en masse, telles que celle représentée en 42 en figure 3, qui étaient fixées par collage.

L'axe d'inertie longitudinal de la plate-forme qui est représenté en 44 en figure 4, passe en partie à l'extérieur de ces cavités 38, 40 et le centre de gravité G de la plate-forme, qui est situé sur cet axe 44, est extérieur à la plate-forme 23.

La ou les masselottes 42 collées dans les cavités 38, 40 de la plate-forme conformément à la technique antérieure permettaient bien de calibrer en masse la plate-forme, mais modifiaient son équilibrage statique et pouvaient en fonctionnement, à cause des vitesses de rotation élevées et des forces centrifuges importantes qui en résultaient, causer des déformations de la plate-forme qui se soulevait vers l'extérieur d'un côté et modifiait les conditions d'écoulement de l'air entre les pales autour du disque 16.

L'invention, comme déjà indiqué, évite ces inconvénients en remplaçant la ou les masselottes 42 de la technique antérieure, par l'usinage d'un trou 46, dans une zone de la bride aval 26 qui est centrée sur l'axe d'inertie longitudinal 44 de la plate-forme.

Une étape préalable du procédé selon l'invention consiste à peser chaque plate-forme 23 et à déterminer son excès de masse par rapport à une valeur prédéterminée, qui est une valeur minimale pour toutes les plates-formes.

Cette différence de masse est convertie en un volume de matière à enlever, c'est-à-dire en un diamètre et une profondeur de trou 46 usiné sur la face aval de la bride 26, et centré sur l'axe d'inertie longitudinal 44 de la plate-forme.

Dans l'exemple représenté et de façon préférentielle, le trou 46 usiné est cylindrique à fond plat.

La position de l'axe d'inertie longitudinal 44 a été déterminée à l'aide d'un logiciel approprié à partir de données relatives à la plate-forme 23 telles que ses dimensions, sa masse, sa forme, et la répartition géométrique de sa masse.

L'axe d'inertie longitudinal 44 passe par la bride médiane 28 et la bride aval 26, et le prélèvement de matière effectué sur la bride aval déplace le centre de gravité de la plate-forme 23 le long de l'axe d'inertie longitudinal 44 de la plate-forme sans modifier l'équilibre statique de la plate-forme autour de cet axe.

En pratique, une table de valeurs renseigne directement sur la profondeur et le diamètre du trou 46 à usiner à partir de la masse de matière à prélever. Cette table est préalablement établie et donne des valeurs de la profondeur et du diamètre qui sont comprises entre des valeurs maximales et minimales prédéterminées afin de ne pas former un trou 46 avec un diamètre trop important et une profondeur trop faible, ou inversement.

Le prélèvement de matière peut être réalisé par lamage, fraisage ou perçage au moyen d'un outil approprié.

Le procédé selon l'invention prévoit ensuite de peser la plate-forme 23 pour vérifier que la tolérance souhaitée par rapport à la valeur prédéterminée est respectée.

Le prélèvement de matière peut être réalisé sur des moyens de fixation de la pièce, comme dans l'exemple représenté, ou sur toute autre partie de la pièce, centrée sur l'axe d'inertie longitudinal de la pièce et accessible à un outil d'usinage.

De façon générale, le prélèvement de matière est réalisé sur l'un des axes d'inertie de la pièce autour duquel on souhaite conserver l'équilibrage statique de la pièce en fonctionnement. Si par exemple la dimension la plus importante de la pièce est circonférentielle par rapport à un axe de rotation, on réalisera le prélèvement de matière sur l'axe d'inertie de la pièce qui s'étend dans cette dimension circonférentielle.

Le procédé de calibrage en masse selon l'invention est applicable à toute pièce destinée à être montée sur un organe tournant. Il est applicable à des pièces de forme simple comme à des pièces de forme complexe.

## Revendications

1. Procédé de calibrage en masse de pièces destinées à être montées en périphérie d'un rotor, **caractérisé en ce que**, les positions des axes d'inertie (44) des pièces (23) étant connues, il consiste, pour chacune des pièces, à prélever par usinage un volume de matière en une zone de la pièce (23) située sur l'un de ses axes d'inertie (44) pour ramener la masse de la pièce à une valeur prédéterminée, avec une tolérance prédéterminée.

2. Procédé selon la revendication 1, **caractérisé en ce que** le volume de matière est prélevé en une zone de la pièce (23) située sur son axe d'inertie longitudinal (44).

3. Procédé selon la revendication 1 ou 2, **caractérisé en ce que** le volume de matière est prélevé dans une face sensiblement radiale d'extrémité de la pièce (23) et est centré sur l'axe d'inertie longitudinal (44) de la pièce (23).

4. Procédé selon l'une des revendications précédentes, **caractérisé en ce que** le prélèvement de matière est réalisé par lamage, fraisage ou perçage.

5. Procédé selon l'une des revendications précédentes, **caractérisé en ce que** le volume de matière prélevé est cylindrique.

6. Procédé selon l'une des revendications précédentes, **caractérisé en ce que** le volume de matière à prélever est déterminé par la différence entre la masse de la pièce (23) avant prélèvement et la valeur prédéterminée, et est converti en un diamètre et une profondeur d'un trou (46) à usiner dans la pièce (23).

7. Procédé selon la revendication 6, **caractérisé en ce que** le diamètre et la profondeur du trou (46) à usiner sont chacun compris entre des valeurs maximales et minimales prédéterminées.

8. Procédé selon l'une des revendications précédentes, **caractérisé en ce que** les pièces sont des plates-formes allongées (23) de forme complexe destinées à être disposées entre les aubes (12) d'une soufflante de turbomachine pour délimiter intérieurement la veine du flux d'air circulant entre les pales (22) des aubes, et **en ce que** le procédé consiste à prélever le volume de matière dans une bride d'extrémité (26) de chaque plate-forme (23) en une zone centrée sur l'axe d'inertie longitudinal (44) de la plate-forme.

9. Pièce destinée à être montée en périphérie d'un rotor, **caractérisée en ce qu'**elle comprend un trou (46) de calibrage en masse centré sur l'un de ses axes d'inertie (44).

10. Pièce selon la revendication 9, **caractérisée en ce que** le trou (46) de calibrage en masse est centré sur l'axe d'inertie longitudinal (44) de la pièce.

11. Pièce selon la revendication 9 ou 10, **caractérisée en ce qu'**elle constitue une plate-forme (23) délimitant intérieurement la veine d'un flux d'air circulant entre les pales des aubes (12) d'une soufflante de turbomachine.

12. Turbomachine telle qu'un turboréacteur ou un turbopropulseur, **caractérisée en ce qu'**elle comprend un rotor (10) en périphérie duquel sont montées des pièces selon l'une des revendications 9 à 11.

## Claims

1. A method of calibrating the mass of components intended to be mounted at the periphery of a rotor, **characterized in that**, with the positions of the axes of inertia (44) of the components (23) being known, it consists, for each of the components, in removing by machining a volume of material in a region of the component (23) situated on one of its axes of inertia (44) in order to bring the mass of the component to a predetermined value, with a predetermined tolerance.

2. The method as claimed in claim 1, **characterized in that** the volume of material is removed in a region of the component (23) situated on its longitudinal axis of inertia (44).

3. The method as claimed in claim 1 or 2, **characterized in that** the volume of material is removed from a substantially radial end face of the component (23) and is centered on the longitudinal axis of inertia (44) of the component(23).

4. The method as claimed in one of the preceding claims, **characterized in that** the removal of material is carried out by spotfacing, milling or drilling.

5. The method as claimed in one of the preceding claims, **characterized in that** the volume of material removed is cylindrical.

6. The method as claimed in one of the preceding claims, **characterized in that** the volume of material to be removed is determined by the difference between the mass of the component (23) before removal and the predetermined value, and is converted into a diameter and a depth of a hole (46) to be machined in the component (23).

7. The method as claimed in claim 6, **characterized in that** the diameter and the depth of the hole (46) to be machined are each between predetermined maximum and minimum values.

8. The method as claimed in one of the preceding claims, **characterized in that** the components are elongate platforms (23) of complex shape intended to be arranged between the blades (12) of a turbomachine fan so as to delimit internally the path of the air flow circulating between the airfoils (22) of the blades, and **characterized in that** the method consists in removing the volume of material from an end flange (26) of each platform (23) in a region centered on the longitudinal axis of inertia of the platform.

9. A component intended to be mounted at the periphery of a rotor, which comprises a mass-calibration hole (46) centered on one of its axes of inertia (44).

10. The component as claimed in claim 9, **characterized in that** the mass-calibration hole is centered on the longitudinal axis of inertia (44) of the component.

11. The component as claimed in claim 9 or 10, which constitutes a platform (23) delimiting internally the path of an air flow circulating between the airfoils of the blades (12) of a turbomachine fan.

12. A turbomachine such as a turbojet or a turboprop, which comprises a rotor (10) at the periphery of which are mounted components as claimed in any one of claims 9 to 11.

## Patentansprüche

1. Verfahren zur Massekalibrierung von Teilen, die am Umfang eines Rotors montiert werden sollen, **dadurch gekennzeichnet, dass** es darin besteht, bei bekannten Stellungen der Trägheitsachsen (44) der Teile (23) für ein jedes der Teile ein Materialvolumen in einem Bereich des Teils (23) spanend zu entnehmen, der sich auf einer seiner Trägheitsachsen (44) befindet, um die Masse des Teil auf einen vorbestimmten Wert mit einer vorbestimmten Toleranz zu bringen.

2. Verfahren nach Anspruch 1, **dadurch gekennzeichnet, dass** das Materialvolumen in einem Bereich des Teils (23) entnommen wird, der sich auf seiner längs verlaufenden Trägheitsachse (44) befindet.

3. Verfahren nach Anspruch 1 oder 2, **dadurch gekennzeichnet, dass** das Materialvolumen in einer im wesentlichen radial verlaufenden Endfläche des Teils (23) entnommen wird und auf die längs verlaufende Trägheitsachse (44) des Teils (23) zentriert wird.

4. Verfahren nach einem der vorangehenden Ansprüche, **dadurch gekennzeichnet, dass** das Entnehmen von Material durch Senken, Fräsen oder Bohren erfolgt.

5. Verfahren nach einem der vorangehenden Ansprüche, **dadurch gekennzeichnet, dass** das entnommene Materialvolumen zylindrisch ist.

6. Verfahren nach einem der vorangehenden Ansprüche, **dadurch gekennzeichnet, dass** das zu entnehmende Materialvolumen durch die Differenz zwischen der Masse des Teils (23) vor Entnahme und dem vorbestimmten Wert bestimmt wird und in einen Durchmesser und in eine Tiefe eines Lochs (46) umgerechnet wird, das in das Teil (23) spanend einzubringen ist.

7. Verfahren nach Anspruch 6, **dadurch gekennzeichnet, dass** der Durchmesser und die Tiefe des einzubringenden Lochs (46) jeweils zwischen vorbestimmten Höchstwerten und Mindestwerten liegen.

8. Verfahren nach einem der vorangehenden Ansprüche, **dadurch gekennzeichnet, dass** die Teile langgestreckte Platten (23) komplexer Form sind, die dazu bestimmt sind, zwischen den Schaufeln (12) eines Gebläses der Turbomaschine angeordnet zu werden, um innen den Kanal des Luftstroms einzugrenzen, der zwischen den Blättern (22) der Schaufeln zirkuliert, und dass das Verfahren darin besteht, das Materialvolumen in einem Endflansch (26) einer jeden Platte (23) in einem Bereich zu entnehmen, der auf die längs verlaufende Trägheitsachse (44) der Platte zentriert ist.

9. Teil, das dazu bestimmt ist, am Umfang eines Rotors montiert zu werden, **dadurch gekennzeichnet, dass** es ein Loch (46) zur Massekalibrierung enthält, das auf eine seiner Trägheitsachsen (44) zentriert ist.

10. Teil nach Anspruch 9, **dadurch gekennzeichnet, dass** das Loch (46) zur Massekalibrierung auf die längs verlaufende Trägheitsachse (44) des Teils zentriert ist.

11. Teil nach Anspruch 9 oder 10, **dadurch gekennzeichnet, dass** es eine Platte (23) bildet, die innen den Kanal eines Luftstroms eingrenzt, der zwischen den Blättern der Schaufeln (12) eines Gebläses der Turbomaschine zirkuliert.

12. Turbomaschine, wie etwa Turbostrahltriebwerk oder Turbopropellertriebwerk, **dadurch gekennzeichnet, dass** sie einen Rotor (10) aufweist, an dessen Umfang Teile nach einem der Ansprüche 9 bis 11 montiert sind.
